# EUROPEAN PATENT SPECIFICATION

(11) **EP 2 475 146 B1**
(45) Date of publication and mention of the grant of the patent: **18.12.2019**
(21) Application number: 12150640.6
(22) Date of filing: 10.01.2012
(51) Int. Cl.: H04L 29/06, G06Q 10/10, G06Q 30/02

(54) **Anchoring and sharing time positions and media reception information on a presentation timeline for multimedia content streamed over a network**
Verankern und gemeinsames Nutzen von Zeitpositionen und Informationen zur Medienrezeption auf einer Zeitleiste für die Darstellung von Multimedia-Inhalten, die über ein Netz gestreamt werden
Ancrage et partage de positions temporelles et d'informations de perception de média sur une chronologie de présentation pour contenu multimédia diffusé sur un réseau

(30) Priority: 10.01.2011 US 201161431210 P; 05.01.2012 US 201213344391
(43) Date of publication of application: 11.07.2012
(73) Proprietor: Samsung Electronics Co., Ltd., Suwon-si, Gyeonggi-do, 443-742 (KR)
(72) Inventor: Nguyen, Nhut, Richardson, TX Texas 75082 (US); Ha, HoJin, Richardson, TX Texas 75082 (US); Cheok, Lai-Tee, Richardson, TX Texas 75082 (US)
(74) Representative: Nederlandsch Octrooibureau

(56) References cited:
- EP-A1- 2 083 386
- BARGERON D ET AL: "Annotations for streaming video on the Web: system design and usage studies", COMPUTER NETWORKS, ELSEVIER SCIENCE PUBLISHERS B.V., AMSTERDAM, NL, vol. 31, no. 11-16, 17 May 1999 (1999-05-17), pages 1139-1153, XP004304545, ISSN: 1389-1286, DOI: 10.1016/S1389-1286(99)00058-4
- I-TING YEH ET AL: "Applying video annotation technology on Web-based multimedia learning framework", PROCEEDINGS OF THE SEVENTH IASTED INTERNATIONAL CONFERENCE ON WEB-BASED EDUCATION, ACTA PRESS, USA; INNSBRUCK, AUSTRIA, 1 January 2008 (2008-01-01), pages 384-389, XP008150647, ISBN: 978-0-88986-723-9
- SCHROETER R ET AL: "Vannotea: A Collaborative Video Indexing, Annotation and Discussion System For Broadband Networks", INTERNET CITATION, 26 October 2003 (2003-10-26), pages 1-8, XP002595826, Retrieved from the Internet: URL:http://espace.library.uq.edu.au/view/U Q:7897 [retrieved on 2010-08-05]
- NUNO CORREIA ET AL: "Active video watching using annotation", PROCEEDINGS OF THE SEVENTH ACM INTERNATIONAL CONFERENCE ON MULTIMEDIA (PART 2) , MULTIMEDIA '99, 5 November 1999 (1999-11-05), pages 151-154, XP55020675, New York, New York, USA DOI: 10.1145/319878.319919 ISBN: 978-1-58-113239-7
- SHAMMA D A ET AL: "Watch what I watch: Using community activity to understand content", PROCEEDINGS OF THE ACM INTERNATIONAL MULTIMEDIA CONFERENCE AND EXHIBITION; INTERNATIONAL MULTIMEDIA CONFERENCE, MM'07 - PROCEEDINGS OF THE 9TH ACM SIG MULTIMEDIA INTERNATIONAL WORKSHOP ON MULTIMEDIA INFORMATION RETRIEVAL,, 24 September 2007 (2007-09-24), pages 275-283, XP002559781, ISBN: 978-1-59593-778-0
- LALIBERTE D ET AL: "A protocol for scalable group and public annotations", COMPUTER NETWORKS AND ISDN SYSTEMS, NORTH HOLLAND PUBLISHING. AMSTERDAM, NL, vol. 27, no. 6, 1 April 1995 (1995-04-01), pages 911-918, XP004013194, ISSN: 0169-7552, DOI: 10.1016/0169-7552(95)00017-2

## Description

### FIELD OF THE INVENTION

The present application relates generally to streaming multimedia content over a network and, more specifically, to anchoring and sharing locations and enjoyment experience information for the multimedia content.

### BACKGROUND OF THE INVENTION

Streaming has become a popular mode of multimedia consumption in recent years. In a streaming session, a user consumes multimedia contents in a linear fashion. For example, the streaming client receives and plays segments of multimedia content received from a streaming server as the segments are delivered to the streaming client in a progressive manner.

When streaming multimedia content, there are often times where the user wants to jump into a particular location on the presentation timeline of the content. For example if the user is watching a DVD version of a movie the user may jump into a particular chapter of the movie and skip previous chapters (e.g., because the user may have already watched those chapters already). The user may also want to have the ability to anchor a particular location on the presentation timeline of the multimedia content so that the user can jump to that location at a later time, or to share multimedia enjoyment experience at that location with other users.

With multimedia streaming, the streaming client may use a signaling mechanism to get information necessary to acquire media segments. For example, in the MPEG Dynamic Adaptive Streaming over the HyperText Transport Protocol (HTTP) (DASH) specification, the client first obtains a Media Presentation Description (MPD) file which includes the information about the streaming servers that host multimedia segment files to be acquired by the client for streaming the multimedia content to the user.

However, there is no known mechanism to signal anchored location information specified by content authors and/or users or a mechanism to provide anchoring points on the presentation timeline to allow other users to share the location information, as well as, the experience of consuming the contents in an effective and intuitive manner.

Thus, there is a need in for an apparatus and method to allow generation and receiving of anchored location information for multimedia content streamed over a network, and to enable sharing content consumption experience among the users.

Bargeron et al. in "Annotations for streaming video on the Web: system design and usage studies"(Computer Networks, Elsevier Science, Vol 31No. 11-16, pp 1139-1153) describes a web-based system for annotating multimedia. A user can access a web page containing video. To that end, a web server is contacted to retrieve the HTML page and a video server is contacted to obtain the video content. If there are annotations associated with the video in the web page, the user can contact an annotation server to retrieve them.

EP 2 083 386 discloses a another web-based (advertisement) video annotation system comprising a media player and a remote database, the remote database being arranged to store annotations and index data associated with advertising media data, the media player being arranged to output advertising media to a user. Once a video has been called by a request from a user, the player is installed into a browser. Then an action script will query the database for stored annotations for that video.

I-Ting Yeh et al. in "Applying video annotation technology on Web-based multimedia learning framework" (Proceedings of the seventh lasted international conference on web-based education, Acta Prss, 2008, pages 384-389) discloses an annotation system for the web-based HyperVideo system. Separate authoring and viewing tools are provided, for creating and viewing annotations, respectively.

R. Schroeter et al. in "Vannotea: A Collaborative Video Indexing, Annotation and Discussion System For Broadband Networks", (Retrieved from the Internet: URL: http://espace.library.uq.edu.au/view/UQ:7897) discloses a system for collaborative annotation of video content. The system comprises an annotation database. The annotations can be coded in XML.

Nuno Correia et al in "Active video watching using annotation" (proceedings of the seventh ACM international conference on multimedia (part 2), 1999, pages 151-154) describes the principles and a model for adding content and structure to existing video materials, based on annotation. Annotations and the corresponding video can be combined in a new HyperVideo document.

### SUMMARY OF THE INVENTION

Summaries of the invention are provided in the attached claims.

Before undertaking the DETAILED DESCRIPTION OF THE INVENTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases.

### BRIEF DESCRIPTION OF THE DRAWINGS

For a more complete understanding of the present disclosure and its advantages, reference is now made to the following description taken in conjunction with the accompanying drawings, in which like reference numerals represent like parts:
FIGURE 1 illustrates a client device according to an exemplary embodiment of the disclosure;
FIGURE 2 illustrates a networked system for streaming multimedia content according to an exemplary embodiment of the disclosure;
FIGURE 3 illustrates multimedia content displayed in association with visual indicators for anchored location information in accordance with an exemplary embodiment of the disclosure;
FIGURE 4 illustrates a flowchart of a process for receiving anchored location information over a network according to an exemplary embodiment of the disclosure; and
FIGURE 5 illustrates a flowchart of a process for managing anchored location information for multimedia content according to an exemplary embodiment of the disclosure.

### DETAILED DESCRIPTION OF THE INVENTION

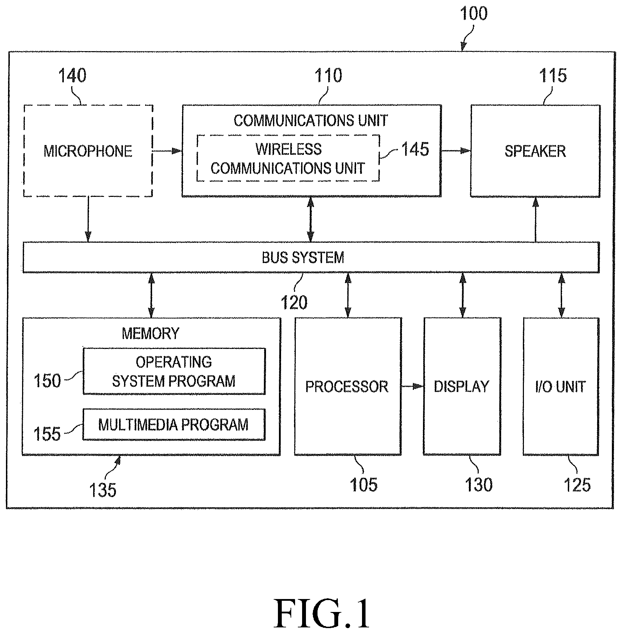

FIGURES 1 through 5, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged communications network.

Illustrative embodiments of the present disclosure provide a method and apparatus for generating and sharing anchored location information about multimedia content streamed over a network. For example, the illustrative embodiments of the present disclosure provide content consumers and authors the ability to generate, share, and/or utilize information about locations over the presentation timeline and comments for those locations within streamed multimedia content. The multimedia content is any type of content that can be streamed over a network. For example, without limitation, the multimedia content may be a video, movie, clip, picture, image, music, audio data, webcast, podcast and/or any other type of content that can be streamed over a network.

The anchored location information is any information associated with one or more locations over the presentation timeline within the multimedia content. For example, the anchored location information may be anchored in a location in the multimedia content. The anchored location information may be specific to a section of the multimedia content in a presentation timeline of the multimedia content. For example, without limitation, the anchored location information may include the location in the multimedia content the anchored location information pertains to, an anchored location for a user to stream content from (e.g., a bookmark), a time in the presentation timeline of the multimedia content the anchored location information pertains to, comments from a content consumer or author, a visual indicator (e.g., a comment, an image, or a short video) for the location in the multimedia content the anchored location information pertains to, and/or any other information associated with one or more locations within the multimedia content. In some embodiments, the anchored location information includes locations and/or comments for multiple different segments in the multimedia contents.

These abilities to generate, share, edit, modify, and utilize anchored location information can greatly enhance the quality of experience of consuming streamed multimedia contents, especially for users in social network circles.

FIGURE 1 illustrates client device 100 according to an advantageous embodiment of the present disclosure. In these illustrative embodiments, client device 100 is a device for generating and/or receiving anchored location information about multimedia content streamed over a network in accordance with the present disclosure. For example, without limitation, client device 100 may be a mobile phone, a laptop computer, a desktop computer, a tablet computer, a media player, an audio player (e.g., MP3 player, radio), a television, and/or any other device suitable for receiving streamed contents.

In this illustrative example, client device 100 comprises processor 105, communications unit 110, speaker 115, bus system 120, input/output (I/O) unit 125, display 130, and memory 135. In some embodiments, client device 100 also comprises microphone 140, and/or wireless communications unit 145. Memory 135 further comprises operating system (OS) program 150 and multimedia program 155. Communications unit 110 provides for communications with other computer systems or devices over a network. As an example, communications unit 110 could include a network interface card or a wireless transceiver. Communications unit 110 may provide communications through wired, optical, or wireless communications links to a network.

In some embodiments, client device is capable of receiving information over a wireless network. For example, Communications unit 110 includes wireless communications unit 145. Wireless communications unit 145 may include an antenna, radio frequency (RF) transceiver, and processing circuitry. The RF transceiver may receive an incoming RF signal from antenna transmitted by a base station of a wireless network. The radio frequency transceiver down-converts the incoming RF signal to produce an intermediate frequency (IF) or a baseband signal. The IF or baseband signal is sent to receiver (RX) processing circuitry, which produces a processed baseband signal by filtering, digitizing the baseband or IF signal, additional filtering, if necessary, demodulation and/or decoding. The RX processing circuitry transmits the processed baseband signal to speaker 115 (i.e., audio data) or to processor 105 for further processing (e.g., video data and audio data processing).

The wireless communications unit 145 may also include transmitter (TX) processing circuitry that receives analog or digital voice data from microphone 140 or other outgoing baseband data (e.g., web data, e-mail, generated location information) from processor 105. The transmitter processing circuitry can encode, modulate, multiplex, and/or digitizes the outgoing baseband data to produce a processed baseband or IF signal. The radio frequency transceiver can receive the outgoing processed baseband or IF signal from transmitter processing circuitry. The radio frequency transceiver up-converts the baseband or IF signal to a radio frequency signal that is transmitted via antenna.

Processor 105 processes instructions for software that may be loaded into memory 135. Processor 105 may include a number of processors, a multi-processor core, or some other type of processor depending on the particular implementation. In some embodiments, processor 105 may be or include one or more graphics processors for processing and rendering graphical and/or video data for display by display 130. In an advantageous embodiment of the present disclosure, processor 105 is a microprocessor or microcontroller. Memory 135 is coupled to processor 105. According to an advantageous embodiment of the present disclosure, part of memory 135 comprises a random access memory (RAM) and another part of memory 135 comprises a non-volatile memory, such as flash memory, a flash memory, an optical disk, a rewritable magnetic tape, or any other type of persistent storage.

Processor 105 executes operating system (OS) program 150 stored in memory 135 in order to control the overall operation of client device 100. In some embodiments, processor 105 controls the reception of forward channel signals and the transmission of reverse channel signals by wireless communications unit 145, in accordance with well-known principles.

Processor 105 is capable of executing other processes and programs resident in memory 135, such as multimedia program 155. Processor 105 can move data into or out of memory 135, as required by an executing process. Processor 105 is also coupled to input/output (I/O) interface 145. Input/output unit 125 allows for input and output of data using other devices that may be connected to the computer system 300. For example, the input/output unit 125 may provide a connection for user input through a keyboard, a mouse, or other suitable input device. The input/output unit 125 may also send output to a display, printer, or other suitable output device.

Display 130 provides a mechanism to visually present information to a user. Display 130 may be a liquid crystal display (LCD) capable of rendering text and/or graphics. Display 130 may also be one or more display lights indicating information to a user. In some embodiments, display 130 is a touch screen that allows user inputs to be received by client device.

In these illustrative embodiments, client device 100 includes multimedia program 155 stored in memory 135 and executable by processor 105. Multimedia program 155 is a program for receiving or generating anchored location information for multimedia contents. For example, is some embodiments, multimedia program 155 includes program code for identifying whether anchored location information exists for multimedia content being streamed to client device 100 and obtaining that anchored location information. In various embodiments, multimedia program 155 includes program code for receiving anchored location information input into client device 100 and sharing that anchored location information with other users (consumers) of the multimedia content.

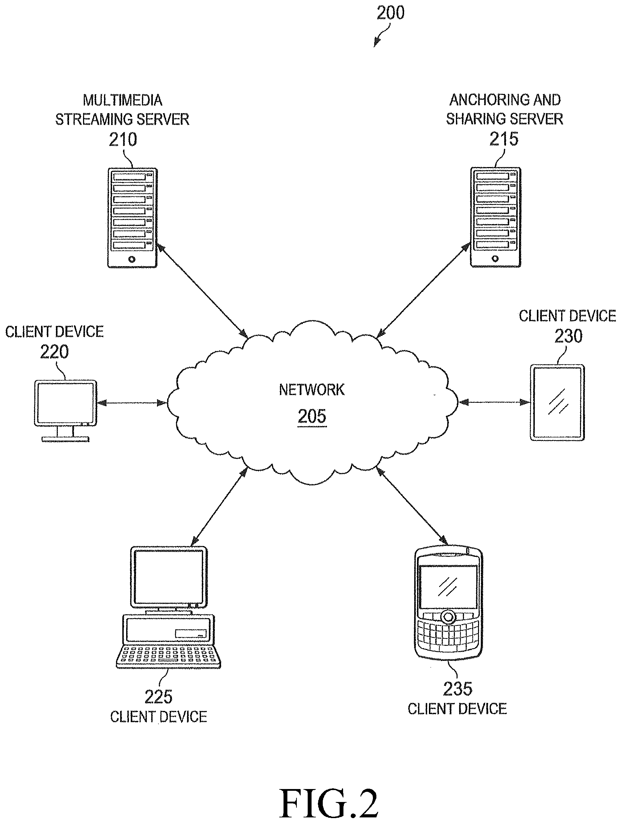

FIGURE 2 illustrates networked system 200 for streaming multimedia content according to an exemplary embodiment of the disclosure. As illustrated, networked system 200 includes network 205, which provides communication links between various computers and other devices. The network 205 may include any suitable connections, such as wired, wireless, or fiber optic links. In some embodiments, network 205 represents at least a portion of the Internet and can include a worldwide collection of networks and gateways that use the Transmission Control Protocol/Internet Protocol (TCP/IP) suite of protocols to communicate with one another, although any other public and/or private network(s) could be used in system 200. Of course, system 200 may be implemented using a number of different types of networks, such as an intranet, a local area network (LAN), a wide area network (WAN), or a cloud computing network.

In this illustrative example, server computers 210 and 215 connect to the network 205. In addition, client devices 220-235 connect to the network 205. The client devices 220-235 may be, for example, client device 100 in FIGURE 1. The client devices 220-235 are clients to the server computers 210 and 215 in this example. The system 200 may include additional server computers, client devices, or other devices.

In various embodiments, network 205 includes a wireless network of base stations provides wireless broadband access to network 205 one or more of client devices 220-235 within a coverage area of the base station. In an exemplary embodiment, base stations in network 205 may communicate with each other and with client devices 220-235 using OFDM or OFDMA techniques.

In this illustrative embodiment, client devices 220-235 receive streamed multimedia content from multimedia streaming server 210. In one example, client devices 220-235 receive the multimedia content using DASH. In other examples, client devices 220-235 may receive multimedia content using real-time streaming protocol (RTSP), real-time transport protocol (RTP), HTTP adaptive streaming (HAS), HTTP live streaming (HLS), smooth streaming, and or/and other type of standard for streaming content.

According to an illustrative embodiment of the present disclosure, upon receipt of multimedia content description (e.g., the Media Presentation Description, MPD, in DASH) from multimedia server 210, client devices 220-235 may search the received multimedia content description to determine whether anchored location information for the multimedia content exists. For example, the searched content may be a file for the multimedia content (e.g., an extensible markup language (XML) file). The client devices 220-235 may determine that the anchored location information exists by identifying an indicator in the search content. In one example, the indicator is a uniform resource locator (URL) or uniform resource indicator (URI) that points to a location on the network where the anchored location information is stored. In this illustrative example, anchoring and sharing server 215 stores the anchored location information for the streamed multimedia content. Thus, client devices 220-235 may request and receive the anchored location information from anchoring and sharing server 215. In other examples, the multimedia content and the anchored location information may be obtained from a same server, for example multimedia streaming server 210.

In these illustrative examples, client devices 220-235 may identify and obtain the anchored location information at a time when the streaming of the multimedia content starts or at any point during the content streaming. In some embodiments, client devices 220-235 periodically request additional anchored location information from anchoring and sharing server 215 to received updated anchored location information throughout streaming of the multimedia content. In one example, users may dynamically and in real-time share comments and anchored locations while streaming the multimedia content.

Upon receipt of the anchored location information, client devices 220-235 can include the anchored location information with the streaming multimedia contents. For example, for each anchored location in the anchored location information, client devices 220-235 may display one or more visual indicators in association with corresponding locations in the multimedia content. For example, client devices 220-235 may display a visual indicator when the corresponding portion of the multimedia content is displayed. In another example, client devices 220-235 may display the visual indicator in proximity to a presentation timeline for the presentation of the multimedia content. The visual indicators may be text or video data (e.g., a short video, an image the scene at the anchored location, or comments on a scene created by content consumers or authors). The anchored locations in the anchored location information may be a beginning of a chapter in a movie provided by the content author, or a bookmark set by a user watching the multimedia content. Client devices 220-235 may also store the anchored location information for future use.

In various embodiments, client devices 220-235 may present the anchored locations obtained from anchoring and sharing server 215 to the user. For example, client devices 220-235 may present the user with a subset of anchored locations in the multimedia content and associated visual indicators. Upon receipt of a selection of one of the visual indicators, client devices 220-235 may stream content from the anchored location in the multimedia content associated with the selected visual indicator. In some examples, client devices 220-235 may also display or expand a display of data (e.g., a comment, image, or video) associated with the selected visual indicator. For example, the user can examine the visual indicators and associated data at each anchored location to determine the location the user wants to watch or listen from. The user can also consume the associated data to further enjoy the streamed video and/or audio data at the anchored location.

In some embodiments of the present disclosure, client devices 220-235 enable users viewing and/or listening to the streamed multimedia content to generate and share anchored location information. For example, a user watching a streaming session can indicate to client devices 220-235 that he or she wants to anchor a particular location in the multimedia content. Upon receiving a request for generating anchored location information, client devices 220-235 identify a location of the multimedia content for the anchored location information to be associated with or anchored. For example, the location may be a portion, segment, scene, chapter, a single frame or image, a time in a presentation timeline of the multimedia content that the anchored location information will be associated with. For example, client devices 220-235 can identify the location by receiving an input from a user of a selection of a time, chapter, or image. Client devices 220-235 may also automatically identify the location as an image or scene presently being displayed at the time the request to generate the anchored location information is received.

In this illustrative embodiment, client devices 220-235 include the location identified in the anchored location information. Additionally, client devices 220-235 may include data associated with the location in the anchored location information. For example, client devices 220-235 may include an image or short clip from the multimedia content at the location. In other examples, client devices 220-235 may receive comments in the form text, voice, and/or video data from the user requesting the generation of the anchored location information.

Client devices 220-235 can store and/or send this additional data with the anchored location information to be shared with other users and/or used at a later time. For example, client devices 220-235 can send the anchored location information to anchoring and sharing server 215. In some embodiments, the anchored location information may include sharing settings where the user may specify that all or a portion of their generated anchored location information may be shared with all, none, or a few specific other users. In some examples, the sharing settings may have policies regarding whether users may subsequently add to, modify, and/or delete other users shared comments and anchored locations.

Client devices 220-235 and/or anchoring and sharing server 215 may generate an indication (e.g., a URL or URI pointing anchoring and sharing server 215) that the generated anchored location information for the multimedia content exists. Client devices 220-235 and/or anchoring and sharing server can send this indication to multimedia server 210 to be included with a file for the multimedia content, such that, upon streaming of the multimedia content, the streaming client will be alerted that such anchored location information exists for the multimedia content. For example, client devices 220-235 and/or anchoring and sharing server may generate and send the indication to be included with the multimedia file using a HTTP PUT request.

In various embodiments, a user can share his or her anchored location information of a particular multimedia content with other users by sending identification information of the anchored location information for a particular content to the other users. For example, client devices 220-235 may send a notification (e.g., e-mail, text message, and push notification) to another user's device indicating the existence of the shared anchored location information. In one example, client devices 220-235 send the notification in real-time as the anchored location information is generated such that the anchored location information may be dynamically shared among users viewing the same multimedia content on separate devices.

The illustrations of client device 100 in FIGURE 1 and networked system 200 in FIGURE 2 are not meant to imply physical or architectural limitations to the manner in which different illustrative embodiments may be implemented. Other components in addition to and/or in place of the ones illustrated may be used. Some components may be unnecessary in particular illustrative embodiments. Also, the blocks are presented to illustrate some functional components. One or more of these blocks may be combined and/or divided into different blocks when implemented in different illustrative embodiments.

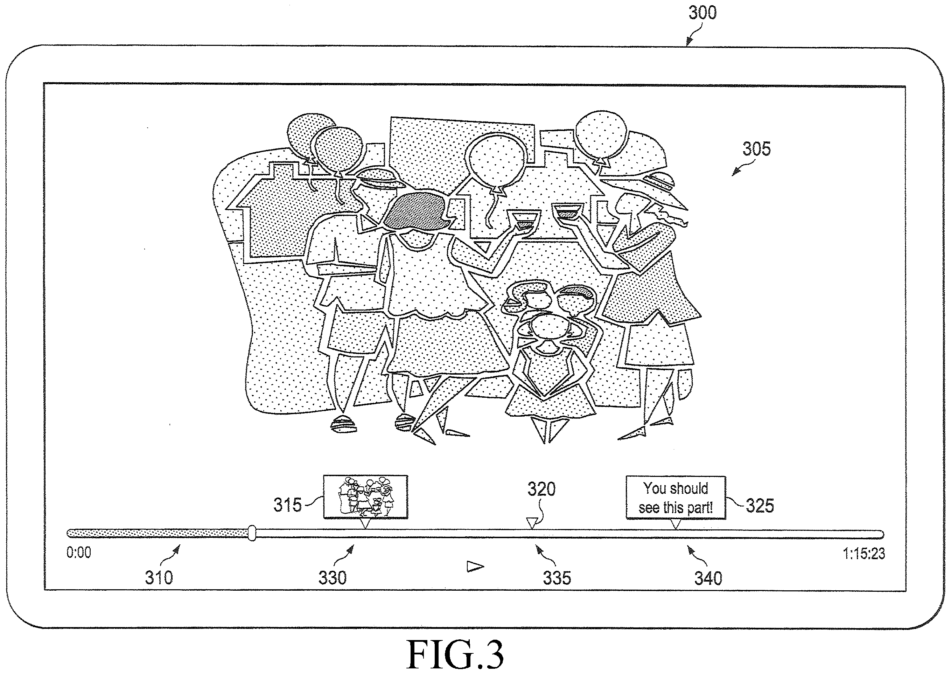

FIGURE 3 illustrates an example of multimedia content displayed in association with visual indicators for anchored location information in accordance with an exemplary embodiment of the disclosure. In this illustrative example, display 300 displays a segment 305 of multimedia content, presentation timeline 310, and visual indicators 315-325 of anchored location information for locations 330-340 in the multimedia content. Display 300 is an example of one embodiment of display 130 in FIGURE 1 or a display for one of client devices 220-235 in FIGURE 2.

As illustrated, display 300 displays segment 305 of the multimedia content. For example, segment 305 is a frame of a video data presently being streamed. Visual indicators 315-325 of anchored location information are displayed in association with locations 330-340 in the multimedia content. For example, selection of one of visual indicator 315 will cause display to display multimedia content from location 330. In this example, visual indicator 315 is a thumbnail image, visual indicator 320 is just an anchor or bookmark, and visual indicator 325 is a comment from another user.

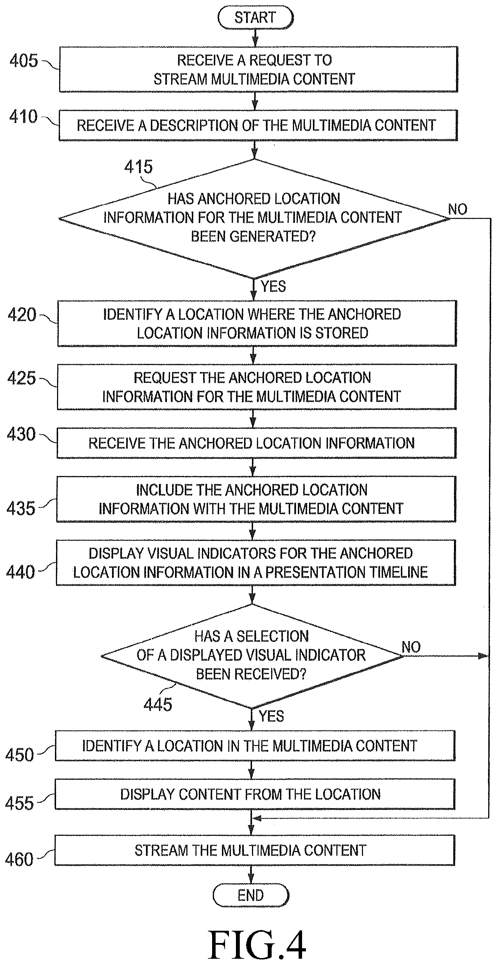

FIGURE 4 illustrates a flowchart of a process for receiving anchored location information over a network according to an exemplary embodiment of the disclosure. The process illustrated may be implemented by multimedia program 155 in client device 100 in FIGURE 1. The process may also be implemented in client devices 220-235 in FIGURE 2.

The process begins by receiving a request to stream multimedia content (block 405). In block 405, the process may send the request to a multimedia server, such as, multimedia server 210 in FIGURE 2. As an example, the multimedia content may be streamed using DASH standards. The process then receives a description of the multimedia content (block 410). In block 410, the description may be a file such as an MPD in DASH or an XML file describing the multimedia content.

Thereafter, the process determines whether anchored location information for the multimedia content has been generated (block 415). In block 415, the process may determine whether the anchored location information for the multimedia content has been generated by parsing the MPD or XML file for a URL or URI pointing to a location of a server storing the anchored location information. If the process determines that anchored location information for the multimedia content has not been generated, the process proceeds to block 460 discussed below.

If, however, the process determines that anchored location information for the multimedia content has been generated, the process identifies a location where the anchored location information is stored (block 420). For example, the anchored location information may be stored in a server such as anchoring and sharing sever 215 in FIGURE 2. The process then requests the anchored location information for the multimedia content (block 425). Thereafter, the process receives the anchored location information (block 430).

The process then includes the anchored location information with the multimedia content (lock 435). In block 435, the process may association the anchored location information with corresponding anchored locations in the multimedia content. For example, the anchored location information includes a comment on a section of the multimedia content and a location in the multimedia content where the section of the multimedia content occurs.

Thereafter, the process displays visual indicators for the anchored location information in a presentation timeline (block 440). In block 440, the process may generate a visual indicator for each location in the anchored location information anchored and/or containing a user comment.

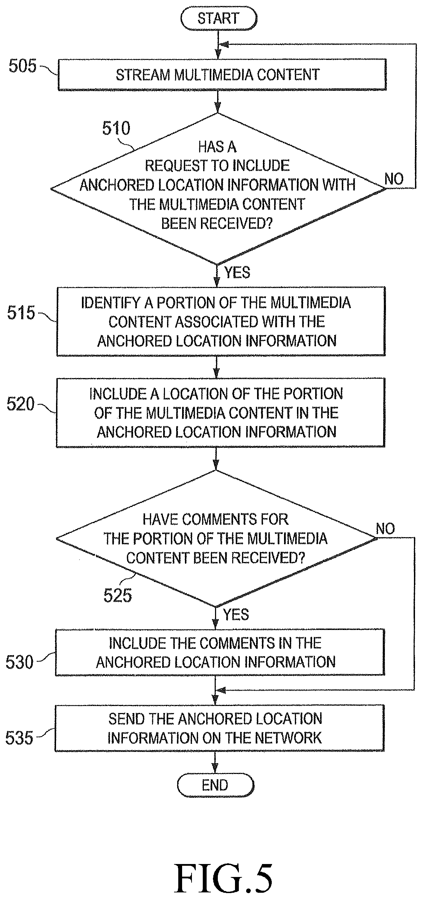

The process then determines whether a selection of a displayed visual indicator has been received (block 445). If the process determines that a selection of a displayed visual indicator has not been received, the process proceeds to block 460 discussed below. If, however, the process determines that a selection of a displayed visual indicator has been received, the process identifies a location in the multimedia content (block 450). Thereafter, the process displays content from the location (block 455). The process then streams the multimedia content (block 460). In block 460, for example, the process may stream the multimedia content from the selected location. If no location was selected, the process may stream the multimedia content from a beginning location or a location last played. Additionally, the process may include functionality to allow users to add and share comments and anchored location information in conjunction with the process described in FIGURE 5 below.

FIGURE 5 illustrates a flowchart of a process for managing anchored location information for multimedia content according to an exemplary embodiment of the disclosure. The process illustrated may be implemented by multimedia program 155 in client device 100 in FIGURE 1. The process may also be implemented in client devices 220-235 in FIGURE 2.

The process begins by streaming multimedia content (block 505). In block 505, the process may stream the multimedia content the request to a multimedia server, such as, multimedia server 210 in FIGURE 2. The multimedia content may be streamed using DASH standards.

The process then determines whether a request to include anchored location information with the multimedia content has been received (block 510). In block 510, the request may be generated by a content consumer or by an author of the multimedia content. If the process determines that a request to include anchored location information with the multimedia content has not been received, the process returns to block 505 and continues to stream the multimedia content.

If, however, the process determines that a request to include anchored location information with the multimedia content has been received, the process identifies a portion of the multimedia content associated with the anchored location information (block 515). For example, the process may identify a scene, image, segment, and/or chapter to which the generated anchored location information pertains. Thereafter, the process includes a location of the portion of the multimedia content in the anchored location information (block 520).

The process then determines whether comments for the portion of the multimedia content have been received (block 525). If the process determines that comments for the portion of the multimedia content have not been received, the process proceeds to block 535 discussed below. If, however, the process determines that comments for the portion of the multimedia content have been received, the process includes the comments in the anchored location information (block 530).

Thereafter, the process sends the anchored location information on the network (block 535). For example, the process may send the anchored location information to a server such as anchoring and sharing server 215 in FIGURE 2. The process may also send the anchored location information to another user's device. In block 535, the process may include an identifier indicating an existence of the anchored location information in a file for streaming the multimedia content over the network. Additionally, the process may include functionality to allow users to receive, display, and modify shared comments and anchored location information in conjunction with the process described in FIGURE 4 above.

The flowchart and block diagrams in the FIGURES illustrate the architecture, functionality, and operation of possible implementations of systems, methods and computer program products according to various illustrative embodiments. In this regard, each block in the flowchart or block diagrams may represent a module, segment, function, and/or a portion of an operation or step. For example, one or more of the blocks may be implemented as program code, in hardware, or a combination of the program code and hardware. When implemented in hardware, the hardware may, for example, take the form of integrated circuits that are manufactured or configured to perform one or more operations in the flowcharts or block diagrams. In some alternative implementations, the function or functions noted in the block may occur out of the order noted in the figures. For example, in some cases, two blocks shown in succession may be executed substantially concurrently, or the blocks may sometimes be executed in the reverse order, depending upon the functionality involved. Also, other blocks may be added in addition to the illustrated blocks in a flowchart or block diagram.

The present disclosure provides a method and apparatus for allowing users to create, share, edit, modify, and utilize anchored location information in streamed multimedia content. These abilities to generate, share, and utilize anchored location information can greatly enhance the quality of experience of consuming streamed multimedia contents, especially for users in social network circles.

Although the present disclosure has been described with an exemplary embodiment, various changes and modifications may be suggested to one skilled in the art.

## Claims

1. A method for receiving anchored location information for a multimedia content over a network by a client device in a network system streaming the multimedia content, the method comprising:
responsive to receiving a request to stream multimedia content and sending the request, receiving a description file of a multimedia content requested over the network, and determining whether anchored location information of the multimedia content has been generated by searching an identifier in the description file of the multimedia content, the identifier indicating a uniform resource locator, URL, or uniform resource indicator, URI, pointing to an anchoring and sharing server where the anchored location information is stored;
requesting the anchored location information of the multimedia content based on the identifier; and
responsive to receiving the anchored location information, displaying thumbnail images corresponding to a particular location in the multimedia content associated with the anchored location information,
wherein the particular location in the multimedia content is identified by receiving a user input for a selection of a time, a chapter or an image in the multimedia content,
wherein the client device shares the anchored location information of the multimedia content with at least one other client device by sending identification information of the anchored location information to said at least one other client device,
wherein the anchored location information includes information on the particular location and the thumbnail images as a visual indicator for the particular location, and
wherein the identification information comprises the identifier indicating the URL or the URI, and indicates an existence of the anchored location information.

2. The method of Claim 1 further comprising:
responsive to receiving a selection of a displayed thumbnail image, identifying the particular location in the multimedia content associated with the displayed thumbnail image; and
streaming the multimedia content from the particular location associated with the displayed thumbnail image.

3. The method of Claim 1, wherein the description file of the multimedia content is a media presentation description, MPD, file received from a server that streams the multimedia content.

4. The method of Claim 1, wherein the anchored location information includes comments on a section of the multimedia content.

5. A method for sending anchored location information for a multimedia content over a network by a client device in a network system streaming the multimedia content, the method comprising:
displaying multimedia content streamed over the network;
responsive to receiving a request for the anchored location information of the multimedia content, identifying a particular location of the multimedia content associated with the anchored location information;
including, in the anchored location information, information on the particular location of the multimedia content associated with the anchored location information and thumbnail images as a visual indicator for the particular location; and
sending the anchored location information including the information on the particular location and the thumbnail images over the network,
wherein the particular location in the multimedia content is identified by receiving a user input for a selection of a time, a chapter or an image in the multimedia content,
wherein the client device shares the anchored location information including the information on the particular location and the thumbnail images with at least one other client device by sending identification information of the anchored location information to said at least one other client device, and
wherein the identification information comprises an identifier indicating a uniform resource locator, URL, or uniform resource indicator, URI, pointing to an anchoring and sharing server where the anchored location information is stored, and indicates an existence of the anchored location information.

6. The method of Claim 5 further comprising:
receiving information on content consumption experience associated with the particular location of the multimedia content, wherein the content consumption experience information includes comments on a scene; and
including the information on the content consumption experience in the anchored location information.

7. The method of Claim 5, wherein the anchored location information including the particular location and the thumbnail images is generated for the multimedia content by an author of the multimedia content.

8. A client device configured to receive anchored location information for a multimedia content over a network in a network system streaming the multimedia content, the client device comprising:
a communications unit configured to communicate with at least one other client device over the network;
a processor configured to receive a description file of the multimedia content requested over a network, to determine whether anchored location information for the multimedia content has been generated by searching an identifier in the description file of the multimedia content in response to receiving a request to stream multimedia content and sending the request, the identifier indicating a uniform resource locator, URL, or uniform resource indicator, URI, pointing to an anchoring and sharing server where the anchored location information is stored, and to request the anchored location information of the multimedia content based on the identifier; and
a display configured to display thumbnail images corresponding to a particular location of the multimedia content associated with the anchored location information in response to the anchored location information being received,
wherein the client device is configured to receive user input for a selection of a time, a chapter or an image in the multimedia content, and to thereby identify the particular location in the multimedia content,
wherein the client device is configured to share the anchored location information of the multimedia content with said at least one other client device by sending identification information of the anchored location information to said at least one other client device,
wherein the anchored location information includes information on the particular location and the thumbnail images as a visual indicator for the particular location, and
wherein the identification information comprises the identifier indicating the URL or the URI, and indicates an existence of the anchored location information.

9. The client device of Claim 8, wherein the processor is further configured to identify the particular location in the multimedia content associated with a displayed thumbnail image in response to receiving a selection of the displayed thumbnail image,
wherein the display is further configured to display content streamed from the particular location associated with the displayed thumbnail image.

10. The client device of Claim 8, wherein the description file of the multimedia content is a media presentation description, MPD, file received from a server that streams the multimedia content.

11. The client device of Claim 8, wherein the anchored location information includes information on content consumption experience for a section of the multimedia content.

12. A client device configured to send anchored location information for a multimedia content over a network in a network system streaming the multimedia content, the client device comprising:
a display configured to display multimedia content streamed over a network;
a processor configured to identify a particular location of the multimedia content associated with the anchored location information in response to receiving a request for the anchored location information of the multimedia content, to include, in the anchored location information, information on the particular location of the multimedia content associated with the anchored location information and thumbnail images as a visual indicator for the particular location, and to send the anchored location information including the information on the particular location and the thumbnail images over the network; and
a communications unit configured to communicate with at least one other client device,
wherein the client device is configured to receive user input for a selection of a time, a chapter or an image in the multimedia content, and to thereby identify the particular location in the multimedia content,
wherein the client device is configured to share the anchored location information including the information on the particular location and the thumbnail images with said at least one other client device by sending identification information of the anchored location information to said at least one other client device, and
wherein the identification information comprises an identifier indicating a uniform resource locator, URL, or uniform resource indicator, URI, pointing to an anchoring and sharing server where the anchored location information is stored, and indicates an existence of the anchored location information.

13. The client device of Claim 12, wherein the processor is further configured to receive information on content consumption experience associated with the particular location of the multimedia content, and include the information on the content consumption experience in the anchored location information.

14. The client device of Claim 12, wherein the anchored location information including the particular location and the thumbnail images is generated for the multimedia content by an author of the multimedia content.

## Patentansprüche

1. Verfahren zum Empfangen verankerter Ortsinformationen für einen Multimediainhalt über ein Netzwerk durch ein Clientgerät in einem Netzwerksystem, das den Multimediainhalt streamt, wobei das Verfahren Folgendes umfasst:
als Reaktion auf das Empfangen einer Anforderung zum Streamen von Multimediainhalt und das Senden der Anforderung, Empfangen einer Beschreibungsdatei eines Multimediainhalts, der über das Netzwerk angefordert wird, und Bestimmen, ob verankerte Ortsinformationen des Multimediainhalts durch Suchen eines Bezeichners in der Beschreibungsdatei des Multimediainhalts erzeugt wurden, wobei der Bezeichner einen Uniform Resource Locator, URL, oder Uniform Resource Indicator, URI, angibt, der auf einen verankernden und freigebenden Server zeigt, auf dem die verankerten Ortsinformationen gespeichert sind;
Anfordern der verankerten Ortsinformationen des Multimediainhalts basierend auf dem Bezeichner; und
als Reaktion auf das Empfangen der verankerten Ortsinformationen, Anzeigen von Miniaturansichtsbildern entsprechend einem besonderen Standort in dem Multimediainhalt, der mit den verankerten Ortsinformationen verbunden ist,
wobei der besondere Standort in dem Multimediainhalt durch das Empfangen einer Benutzereingabe für eine Auswahl einer Uhrzeit, eines Kapitels oder eines Bilds in dem Multimediainhalt identifiziert wird,
wobei das Clientgerät die verankerten Ortsinformationen des Multimediainhalts mit mindestens einem anderen Clientgerät teilt, indem es Identifizierungsinformationen der verankerten Ortsinformationen an das mindestens eine andere Clientgerät sendet,
wobei die verankerten Ortsinformationen Informationen über den besonderen Standort und die Miniaturansichtsbilder als einen visuellen Anzeiger für den besonderen Standort einschließen, und
wobei die Identifizierungsinformationen den Bezeichner umfassen, der den URL oder den URI angibt, und ein Vorhandensein der verankerten Ortsinformationen angeben.

2. Verfahren nach Anspruch 1, das ferner Folgendes umfasst:
als Reaktion auf das Empfangen einer Auswahl eines angezeigten Miniaturansichtsbildes, Identifizieren des besonderen Standorts in dem Multimediainhalt, der mit dem angezeigten Miniaturansichtsbild verbunden ist; und
Streamen des Multimediainhalts von dem besonderen Standort, der mit dem angezeigten Miniaturansichtsbild verbunden ist.

3. Verfahren nach Anspruch 1, wobei die Beschreibungsdatei des Multimediainhalts eine Media Presentation Description(MPD)-Datei ist, die von einem Server empfangen wird, der den Multimediainhalt streamt.

4. Verfahren nach Anspruch 1, wobei die verankerten Ortsinformationen Kommentare zu einem Abschnitt des Multimediainhalts einschließen.

5. Verfahren zum Senden verankerter Ortsinformationen für einen Multimediainhalt über ein Netzwerk durch ein Clientgerät in einem Netzwerksystem, das den Multimediainhalt streamt, wobei das Verfahren Folgendes umfasst:
Anzeigen von Multimediainhalt, der über das Netzwerk gestreamt wird;
als Reaktion auf das Empfangen einer Anforderung der verankerten Ortsinformationen des Multimediainhalts, Identifizieren eines besonderen Standorts des Multimediainhalts, der mit den verankerten Ortsinformationen verbunden ist;
Einschließen in den verankerten Ortsinformationen von Informationen über den besonderen Standort des Multimediainhalts, der mit den verankerten Ortsinformationen verbunden ist, und Miniaturansichtsbilder als einen visuellen Anzeiger für den besonderen Standort; und
Senden der verankerten Ortsinformationen, einschließlich der Informationen über den besonderen Standort und der Miniaturansichtsbilder über das Netzwerk,
wobei der besondere Standort in dem Multimediainhalt durch das Empfangen einer Benutzereingabe für eine Auswahl einer Uhrzeit, eines Kapitels oder eines Bilds in dem Multimediainhalt identifiziert wird,
wobei das Clientgerät die verankerten Ortsinformationen, einschließlich der Informationen über den besonderen Standort und die Miniaturansichtsbilder mit mindestens einem anderen Clientgerät teilt, indem es Identifizierungsinformationen der verankerten Ortsinformationen an das mindestens eine andere Clientgerät sendet,
wobei die Identifizierungsinformationen einen Bezeichner umfassen, der einen Uniform Resource Locator, URL, oder Uniform Resource Indicator, URI, angibt, der auf einen verankernden und freigebenden Server zeigt, auf dem die verankerten Ortsinformationen gespeichert sind, und ein Vorhandensein der verankerten Ortsinformationen angeben.

6. Verfahren nach Anspruch 5, das ferner Folgendes umfasst:
Empfangen von Informationen über Inhaltsverbrauchserfahrung, die mit dem besonderen Standort des Multimediainhalts verbunden ist, wobei die Informationen über Inhaltsverbrauchserfahrung Kommentare zu einer Szene einschließen; und
Einschließen der Informationen über die Inhaltsverbrauchserfahrung in den verankerten Ortsinformationen.

7. Verfahren nach Anspruch 5, wobei die verankerten Ortsinformationen, einschließlich des besonderen Standorts und die Miniaturansichtsbilder für den Multimediainhalt von einem Autor des Multimediainhalts erzeugt werden.

8. Clientgerät, das zum Empfangen verankerter Ortsinformationen für einen Multimediainhalt über ein Netzwerk in einem Netzwerksystem konfiguriert ist, das den Multimediainhalt streamt, wobei das Clientgerät Folgendes umfasst:
eine Kommunikationseinheit, die konfiguriert ist, um mit mindestens einem anderen Clientgerät über das Netzwerk zu kommunizieren;
einen Prozessor, der zum Empfangen einer Beschreibungsdatei des Multimediainhalts konfiguriert ist, der über ein Netzwerk angefordert wird, um zu bestimmen, ob verankerte Ortsinformationen für den Multimediainhalt durch Suchen eines Bezeichners in der Beschreibungsdatei des Multimediainhalts als Reaktion auf das Empfangen einer Anforderung erzeugt wurden, um Multimediainhalt zu streamen, und Senden der Anforderung, wobei der Bezeichner einen Uniform Resource Locator, URL, oder Uniform Resource Indicator, URI, angibt, der auf einen verankernden und freigebenden Server zeigt, auf dem die verankerten Ortsinformationen gespeichert sind, und um die verankerten Ortsinformationen des Multimediainhalts basierend auf dem Bezeichner anzufordern; und
eine Anzeige, die zum Anzeigen von Miniaturansichtsbildern entsprechend einem besonderen Standort des Multimediainhalts, der mit den verankerten Ortsinformationen verbunden ist, als Reaktion auf die verankerten Ortsinformationen, die empfangen wurden, konfiguriert ist,
wobei das Clientgerät konfiguriert ist, um Benutzereingabe für eine Auswahl einer Uhrzeit, eines Kapitels oder eines Bilds in dem Multimediainhalt zu empfangen, und um dadurch den besonderen Standort in dem Multimediainhalt zu identifizieren,
wobei das Clientgerät konfiguriert ist, um die verankerten Ortsinformationen des Multimediainhalts mit mindestens einem anderen Clientgerät zu teilen, indem es Identifizierungsinformationen der verankerten Ortsinformationen an das mindestens eine andere Clientgerät sendet,
wobei die verankerten Ortsinformationen Informationen über den besonderen Standort und die Miniaturansichtsbilder als einen visuellen Anzeiger für den besonderen Standort einschließen, und
wobei die Identifizierungsinformationen den Bezeichner umfassen, der den URL oder den URI angibt, und ein Vorhandensein der verankerten Ortsinformationen angeben.

9. Clientgerät nach Anspruch 8, wobei der Prozessor ferner konfiguriert ist, um den besonderen Standort in dem Multimediainhalt zu identifizieren, der mit einem angezeigten Miniaturansichtsbild als Reaktion auf das Empfangen einer Auswahl des angezeigten Miniaturansichtsbilds verbunden ist,
wobei die Anzeige ferner konfiguriert ist, um Inhalt, der von dem besonderen Standort gestreamt wird, der mit dem angezeigten Miniaturansichtsbild verbunden ist, anzuzeigen.

10. Clientgerät nach Anspruch 8, wobei die Beschreibungsdatei des Multimediainhalts eine Media Presentation Description(MPD)-Datei ist, die von einem Server empfangen wird, der den Multimediainhalt streamt.

11. Clientgerät nach Anspruch 8, wobei die verankerten Ortsinformationen Informationen über eine Inhaltsverbrauchserfahrung für einen Abschnitt des Multimediainhalts einschließen.

12. Clientgerät, das zum Senden verankerter Ortsinformationen für einen Multimediainhalt über ein Netzwerk in einem Netzwerksystem, das den Multimediainhalt streamt, konfiguriert ist, wobei das Clientgerät Folgendes umfasst:
eine Anzeige, die konfiguriert ist, um Multimediainhalt, der über ein Netzwerk gestreamt wird, anzuzeigen;
einen Prozessor, der konfiguriert ist, um einen besonderen Standort des Multimediainhalts zu identifizieren, der mit den verankerten Ortsinformationen verbunden ist, als Reaktion auf das Empfangen einer Anforderung der verankerten Ortsinformationen des Multimediainhalts, um in den verankerten Ortsinformationen Informationen über den besonderen Standort des Multimediainhalts, der mit den verankerten Ortsinformationen verbunden ist, und Miniaturansichtsbilder als einen visueller Anzeiger für den besonderen Standort einzuschließen, und um die verankerten Ortsinformationen, einschließlich der Informationen über den besonderen Standort und der Miniaturansichtsbilder über das Netzwerk zu senden; und
eine Kommunikationseinheit, die konfiguriert ist, um mit mindestens einem anderen Clientgerät zu kommunizieren,
wobei das Clientgerät konfiguriert ist, um Benutzereingabe für eine Auswahl einer Uhrzeit, eines Kapitels oder eines Bilds in dem Multimediainhalt zu empfangen, und um dadurch den besonderen Standort in dem Multimediainhalt zu identifizieren,
wobei das Clientgerät konfiguriert ist, um die verankerten Ortsinformationen, einschließlich der Informationen über den besonderen Standort und die Miniaturansichtsbilder mit dem mindestens einen anderen Clientgerät zu teilen, indem es Identifizierungsinformationen der verankerten Ortsinformationen an das mindestens eine andere Clientgerät sendet, und
wobei die Identifizierungsinformationen einen Bezeichner umfassen, der einen Uniform Resource Locator, URL, oder Uniform Resource Indicator, URI, angibt, der auf einen verankernden und freigebenden Server zeigt, auf dem die verankerten Ortsinformationen gespeichert sind, und ein Vorhandensein der verankerten Ortsinformationen angeben.

13. Clientgerät nach Anspruch 12, wobei der Prozessor ferner konfiguriert ist, um Informationen über die Inhaltsverbrauchserfahrung, die mit dem besonderen Standort des Multimediainhalts verbunden ist, zu empfangen und die Informationen über die Inhaltsverbrauchserfahrung in den verankerten Ortsinformationen einzuschließen.

14. Clientgerät nach Anspruch 12, wobei die verankerten Ortsinformationen, einschließlich des besonderen Standorts und die Miniaturansichtsbilder für den Multimediainhalt von einem Autor des Multimediainhalts erzeugt werden.

## Revendications

1. Procédé de réception d'information de localisation ancrée pour un contenu multimédia sur un réseau par un dispositif client dans un système de réseau diffusant en continu le contenu multimédia, le procédé comprenant :
en réponse à la réception d'une demande de diffusion en continu de contenu multimédia et à l'envoi de la demande, recevoir un fichier de description d'un contenu multimédia demandé sur le réseau, et déterminer si de l'information de localisation ancrée du contenu multimédia a été générée en recherchant un identifiant dans le fichier de description du contenu multimédia, l'identifiant indiquant un localisateur de ressource uniforme, URL, ou un indicateur de ressource uniforme, URI, indiquant un serveur d'ancrage et de partage où l'information de localisation ancrée est stockée ;
demander l'information de localisation ancrée du contenu multimédia sur la base de l'identifiant ; et
en réponse à la réception de l'information de localisation ancrée, afficher des images miniatures correspondant à une localisation particulière dans le contenu multimédia associée à l'information de localisation ancrée,
où la localisation particulière dans le contenu multimédia est identifiée en recevant une entrée d'utilisateur pour une sélection d'une heure, d'un chapitre ou d'une image dans le contenu multimédia,
où le dispositif client partage l'information de localisation ancrée du contenu multimédia avec au moins un autre dispositif client en envoyant de l'information d'identification de l'information de localisation ancrée audit au moins un autre dispositif client,
où l'information de localisation ancrée comprend de l'information sur la localisation particulière et les images miniatures en tant qu'indicateur visuel de la localisation particulière, et
où l'information d'identification comprend l'identifiant indiquant l'URL ou l'URI, et indique l'existence de l'information de localisation ancrée.

2. Procédé selon la revendication 1 comprenant en outre :
en réponse à la réception d'une sélection d'une image miniature affichée, identifier la localisation particulière dans le contenu multimédia associée à l'image miniature affichée ; et
diffuser en continu le contenu multimédia à partir de la location particulière associée à l'image miniature affichée.

3. Procédé selon la revendication 1, où le fichier de description du contenu multimédia est un fichier de description de présentation multimédia, MPD, reçu à partir d'un serveur qui diffuse en continu le contenu multimédia.

4. Procédé selon la revendication 1, où l'information de localisation ancrée comprend des commentaires sur une section du contenu multimédia.

5. Procédé d'envoi d'information de localisation ancrée pour un contenu multimédia sur un réseau par un dispositif client dans un système de réseau diffusant en continu le contenu multimédia, le procédé comprenant :
afficher du contenu multimédia transmis sur le réseau ;
en réponse à la réception d'une demande de l'information de localisation ancrée du contenu multimédia, identifier une localisation particulière du contenu multimédia associée à l'information de localisation ancrée ;
inclure, dans l'information de localisation ancrée, de l'information sur la localisation particulière du contenu multimédia associée à l'information de localisation ancrée et des images miniatures en tant qu'indicateur visuel de la localisation particulière ; et
envoyer l'information de localisation ancrée incluant l'information sur la localisation particulière et les images miniatures sur le réseau,
où la localisation particulière dans le contenu multimédia est identifiée en recevant une entrée d'utilisateur pour une sélection d'une heure, d'un chapitre ou d'une image dans le contenu multimédia,
où le dispositif client partage l'information de localisation ancrée incluant l'information sur la localisation particulière et les images miniatures avec au moins un autre dispositif client en envoyant de l'information d'identification de l'information de localisation ancrée audit au moins un autre dispositif client, et
où l'information d'identification comprend un identifiant indiquant un localisateur de ressource uniforme, URL, ou un indicateur de ressource uniforme, URI, indiquant un serveur d'ancrage et de partage où l'information de localisation ancrée est stockée, et indique l'existence de l'information de localisation ancrée.

6. Procédé selon la revendication 5 comprenant en outre :
recevoir de l'information sur une expérience de consommation de contenu associée à la localisation particulière du contenu multimédia, où l'information d'expérience de consommation de contenu comprend des commentaires sur une scène ; et
inclure l'information sur l'expérience de consommation de contenu dans l'information de localisation ancrée.

7. Procédé selon la revendication 5, où l'information de localisation ancrée incluant la localisation particulière et les images miniatures est générée pour le contenu multimédia par un auteur du contenu multimédia.

8. Dispositif client configuré pour recevoir de l'information de localisation ancrée pour un contenu multimédia sur un réseau dans un système de réseau diffusant en continu le contenu multimédia, le dispositif client comprenant :
une unité de communication configurée pour communiquer avec au moins un autre dispositif client sur le réseau ;
un processeur configuré pour recevoir un fichier de description du contenu multimédia demandé sur un réseau, pour déterminer si de l'information de localisation ancrée pour le contenu multimédia a été générée en recherchant un identifiant dans le fichier de description du contenu multimédia en réponse à la réception d'une demande de diffusion en continu de contenu multimédia et envoyer la demande, l'identifiant indiquant un localisateur de ressource uniforme, URL, ou un indicateur de ressource uniforme, URI, indiquant un serveur d'ancrage et de partage où l'information de localisation ancrée est stockée, et pour demander l'information de localisation ancrée du contenu multimédia sur la base de l'identifiant ; et
une unité d'affichage configurée pour afficher des images miniatures correspondant à une localisation particulière du contenu multimédia associée à l'information de localisation ancrée en réponse à la réception de l'information de localisation ancrée,
où le dispositif client est configuré pour recevoir une entrée d'utilisateur pour une sélection d'une heure, d'un chapitre ou d'une image dans le contenu multimédia, et pour identifier ainsi la localisation particulière dans le contenu multimédia,
où le dispositif client est configuré pour partager l'information de localisation ancrée du contenu multimédia avec ledit au moins un autre dispositif client en envoyant de l'information d'identification de l'information de localisation ancrée audit au moins un autre dispositif client,
où l'information de localisation ancrée comprend de l'information sur la localisation particulière et les images miniatures en tant qu'indicateur visuel pour la localisation particulière, et
où l'information d'identification comprend l'identifiant indiquant l'URL ou l'URI, et indique l'existence de l'information de localisation ancrée.

9. Dispositif client selon la revendication 8, où le processeur est configuré en outre pour identifier la localisation particulière dans le contenu multimédia associée à une image miniature affichée en réponse à la réception d'une sélection de l'image miniature affichée,
où l'unité d'affichage est configurée en outre pour afficher du contenu transmis à partir de la localisation particulière associée à l'image miniature affichée.

10. Dispositif client selon la revendication 8, où le fichier de description du contenu multimédia est un fichier de description de présentation multimédia, MPD, reçu à partir d'un serveur qui diffuse en continu le contenu multimédia.

11. Dispositif client selon la revendication 8, où l'information de localisation ancrée comprend de l'information sur l'expérience de consommation de contenu pour une section du contenu multimédia.

12. Dispositif client configuré pour envoyer de l'information de localisation ancrée pour un contenu multimédia sur un réseau dans un système de réseau diffusant en continu le contenu multimédia, le dispositif client comprenant :
une unité d'affichage configurée pour afficher du contenu multimédia transmis sur un réseau ;
un processeur configuré pour identifier une localisation particulière du contenu multimédia associée à l'information de localisation ancrée en réponse à la réception d'une demande de l'information de localisation ancrée du contenu multimédia, pour inclure, dans l'information de localisation ancrée, de l'information sur la localisation particulière du contenu multimédia associée à l'information de localisation ancrée et des images miniatures en tant qu'indicateur visuel pour la localisation particulière, et pour envoyer l'information de localisation ancrée incluant l'information sur la localisation particulière et les images miniatures sur le réseau ; et
une unité de communications configurée pour communiquer avec au moins un autre dispositif client,
où le dispositif client est configuré pour recevoir une entrée d'utilisateur pour une sélection d'une heure, d'un chapitre ou d'une image dans le contenu multimédia, et pour identifier ainsi la localisation particulière dans le contenu multimédia,
où le dispositif client est configuré pour partager l'information de localisation ancrée incluant l'information sur la localisation particulière et les images miniature avec ledit au moins un autre dispositif client en envoyant de l'information d'identification de l'information de localisation ancrée audit au moins un autre dispositif client, et
où l'information d'identification comprend un identifiant indiquant un localisateur de ressource uniforme, URL, ou un indicateur de ressource uniforme, URI, indiquant un serveur d'ancrage et de partage où l'information de localisation ancrée est stockée, et indique l'existence de l'information de localisation ancrée.

13. Dispositif client selon la revendication 12, où le processeur est configuré en outre pour recevoir de l'information sur une expérience de consommation de contenu associée à la localisation particulière du contenu multimédia, et pour inclure l'information sur l'expérience de consommation de contenu dans l'information de localisation ancrée.

14. Dispositif client selon la revendication 12, où l'information de localisation ancrée incluant la localisation particulière et les images miniature est générée pour le contenu multimédia par un auteur du contenu multimédia.
